# EUROPEAN PATENT SPECIFICATION

(11) **EP 3 961 879 B1**
(45) Date of publication and mention of the grant of the patent: **25.09.2024**
(21) Application number: 21192144.0
(22) Date of filing: 19.08.2021
(51) Int. Cl.: H02K 5/08, H02K 15/12, H02K 15/02, H02K 5/128, H02K 1/18, H02K 5/24, F16K 31/04, F16K 27/00, H02K 1/14, H02K 3/52, H02K 15/14

(54) **STATOR UNIT, MOTOR-OPERATED VALVE, AND METHOD FOR MANUFACTURING STATOR UNIT**
STATOREINHEIT, MOTORBETÄTIGTES VENTIL UND HERSTELLUNGSVERFAHREN EINER SOLCHEN STATOREINHEIT
UNITÉ DE STATOR, VANNE MOTORISÉE ET PROCÉDÉ DE FABRICATION D'UNITÉ DE STATOR

(30) Priority: 28.08.2020 JP 2020144211
(43) Date of publication of application: 02.03.2022
(73) Proprietor: Fujikoki Corporation, Tokyo 158-0082 (JP)
(72) Inventor: ASANO, Teppei, Tokyo 1580082 (JP); YATAGAI, Hiroomi, Tokyo 1580082 (JP)
(74) Representative: Ter Meer Steinmeister & Partner

(56) References cited:
- WO-A1-2019/208126
- JP-A- 2001 343 085
- JP-A- 2006 069 148
- JP-A- 2009 213 275
- JP-A- 2019 146 299
- US-A1- 2013 285 481
- US-A1- 2015 302 963

## Description

### BACKGROUND OF THE INVENTION

### 1. Field of the Invention

The present invention relates to a stator unit for use in a motor-operated valve, to a motor-operated valve including a stator unit, and to a method for manufacturing a stator unit.

### 2. Description of the Related Art

Examples of stator units according to the related art are disclosed in Japanese Unexamined Patent Application Publication No. 2001-343085 (Patent Literature 1) and Japanese Unexamined Patent Application Publication No. 2006-20480 (Patent Literature 2).

The stator unit (coil for a motor-operated valve) disclosed in Patent Literature 1 includes a cover and a stator. The cover is in the shape of a cap. The stator has a hollow cylindrical shape. The stator includes a metal component, a coil wire, and a mold made of rigid resin. The peripheral part of the body constituted of the metal component and the coil wire is covered with the mold. The stator is accommodated in the cover. The space between the cover and the stator is filled with filling resin that is flexible.

The process for manufacturing such a stator unit may include the steps of: (1) forming a stator by insert molding; (2) placing the stator in a cover; (3) inserting a mandrel (jig) into a stator to position the cover and the stator; (4) clamping the mandrel and the cover; (5) pouring filling resin in liquid form into the cover with its lower end facing upward; and (6) removing the mandrel after the filling resin sets. The stator unit obtained by this process is in finished form.

Likewise, the stator unit (electromagnetic actuator) disclosed in Patent Literature 2 includes a cover and a stator. The space between the cover and the stator is filled with filling resin.

The stator described in Patent Literature 2 is formed by insert molding in such a manner that a gap on an internal circumferential surface of a metal component is filled with rigid resin. The stator includes an annular rib. The rib fits into an annular groove in an upper-end wall portion of the cover. When filling resin in liquid form is poured into the cover, the rib in the groove keeps the filling resin from leaking into the stator. This structure eliminates the need for a jig such as a mandrel during the manufacturing of a stator unit.

It is required that the stator included in the stator unit disclosed in Patent Literature 1 and the stator included in the stator unit disclosed in Patent Literature 2 be both formed by insert molding. More man-hours are needed to manufacture such a stator unit, thus leading to an increase in the cost of manufacturing. The need of clamping the mandrel and the cover during the manufacturing of the stator unit disclosed in Patent Literature 1 causes a further increase in the cost of manufacturing.

The stator unit disclosed in Patent Literature 2 eliminates the need for a jig. To that end, the gap on the internal circumferential surface of the metal component of the stator is filled with rigid resin. Unlike the case with filling resin, cracks are likely to form between the rigid resin and the metal component. Thus, this structure may fail to prevent moisture from entering the stator.

JP 2019 146299 A discloses a stator unit and a motor-operated valve with the same, wherein a detent member comprises: an annular flat plate part; detent engage piece parts provided in three or more engage plate parts which are provided from an inner peripheral side of the annular flat plate part and bent to a direction opposite to side of a yoke; and three or more projected piece parts which are bent up from the annular flat plate part to the side of the yoke. Distal end portions of the projected piece parts are welded to the yoke.

JP 2001 343085 A discloses a water proof coil for an electric motor operated valve. An electro-magnetic coil body portion is so constructed to be sealed up as against the open air, wherein a cover which encloses a top part and a side part of the coil body portion is made of synthetic resin of cuplike form as a whole, wherein further when the electric motor operated valve is assembled with a bottom side of a lead wire drawing part being sealed by the soft synthetic resin materials and with the electric motor operated valve main body being inserted into the coil main body through an opening formed in the sealed part, the outer periphery of the electric motor operated valve is arranged in close contact with the internal circumference of the opening, whereby water is prevented from being encroached into the interior of the electro-magnetic coil body portion.

US 2013/285481 A1 discloses a stator of a drive motor for an electrically operated valve, wherein the stator is integrally formed with a resin mold by arranging a stator assembly within metal molds and injecting a molten resin from a gate at one position. An annular plate is mounted to an upper portion of the stator assembly so as to prevent the molten resin from intruding into magnetic pole teeth and prevent a weld line from being generated in an outer peripheral surface of the resin mold.

US 2015/302963 A1 discloses an electromagnetic drive coil unit and a molding method thereof. In a method of molding an electromagnetic drive coil unit in which a stator assembly includes bobbins having stator coils wound thereon and yokes in which an inner yoke having magnetic pole teeth and an outer yoke having magnetic pole teeth are combined and in which the stator assembly and a power supply terminal supplying power to the bobbins are molded in a resin, an inner molding process is performed on the inside of the outer yoke in a state where ends of the stator coils of the stator assembly are connected to the power supply terminal and an outer molding process is performed to cover an outer circumference of the stator assembly having an inner molded portion and an outside of the power supply terminal after the inner molding process.

JP 2009/213275 A discloses a motor eliminating the use of a complicated metal mold, including more design freedom. JP 2006/069148 A discloses a mold forming method and a vacuum pump equipped with a stator column manufactured by this method.

### SUMMARY OF THE INVENTION

It is an object of the present invention to provide a stator unit and a motor-operated valve that are highly waterproof and enable a reduction in the cost of manufacturing. It is another object of the present invention to provide a method for manufacturing the stator unit.

To that end, an aspect of the present invention is directed to a stator unit comprising the features of claim 1. The stator unit includes a cover, a stator, and a mold. The cover includes a circumferential wall portion and an end wall portion contiguous with an end of the circumferential wall portion. The stator is accommodated in the cover and has a hollow cylindrical shape. The mold is made of filling resin with which the inside of the stator and the space between the stator and the cover are filled. The end wall portion has a dome portion, the cover includes a rib which has an annular shape and protrudes from an inner surface from the dome portion, the rib including a circumferential surface that faces outward. The circumferential surface defines a region having an axis that coincides with an axis of the stator. The region defined by the circumferential surface has a diameter equal to or smaller than the inside diameter of the stator.

The circumferential surface preferably has a height, in the axial direction of 1 to 10 mm.

The stator preferably has an internal circumferential surface covered with the mold.

Another aspect of the present invention is directed to a motor-operated valve. The motor-operated valve includes a valve main body, a can, and a stator unit. The can is attached to the valve main body. The stator unit is mounted on the outside of the can. The stator unit is the stator unit described above.

To attain the aforementioned objective, still another aspect of the invention is directed to a method for manufacturing a stator unit. The stator unit includes a cover and a stator having a hollow cylindrical shape. The cover includes a circumferential wall portion and an end wall portion contiguous with an end of the circumferential wall portion. The end wall portion has an inner surface including a circumferential surface that faces inward. The circumferential surface defines a region having an axis that coincides with an axis of the stator. The region defined by the circumferential surface has a diameter equal to or smaller than the inside diameter of the stator. The method includes: placing the stator in the cover; inserting, into the stator, a jig having a coefficient of linear expansion higher than a coefficient of linear expansion of the cover and having a hollow cylindrical shape or a solid cylindrical shape; placing the jig in such a manner that an external circumferential surface at a tip of the jig faces the circumferential surface; heating the cover and the jig in such a manner that the external circumferential surface at the tip of the jig and the circumferential surface come into contact with each other along an entire circumference; and pouring filling resin in liquid form in a state in which another end of the circumferential wall portion of the cover faces upward in such a manner that the inside of the stator and the space between the stator and the cover are filled with the filling resin.

To attain the aforementioned objective, still another aspect of the invention is directed to a method for manufacturing a stator unit. The stator unit includes a cover and a stator having a hollow cylindrical shape. The cover includes a circumferential wall portion and an end wall portion contiguous with an end of the circumferential wall portion. The end wall portion has an inner surface including a circumferential surface that faces outward. The circumferential surface defines a region having an axis that coincides with an axis of the stator. The region defined by the circumferential surface has a diameter equal to or smaller than the inside diameter of the stator. The method includes: placing the stator in the cover; inserting, into the stator, a jig having a coefficient of linear expansion lower than a coefficient of linear expansion of the cover and having a hollow cylindrical shape; placing the jig in such a manner that an internal circumferential surface at a tip of the jig faces the circumferential surface; heating the cover and the jig in such a manner that the internal circumferential surface at the tip of the jig and the circumferential surface come into contact with each other along an entire circumference; and pouring filling resin in liquid form in a state in which another end of the circumferential wall portion of the cover faces upward in such a manner that the inside of the stator and the space between the stator and the cover are filled with the filling resin.

The stator preferably has an inside diameter greater than the outside diameter of the jig.

The jig preferably includes a stator-holding portion that is in contact with the stator in such a way as to restrict movement of the stator along an axis of the stator in a state in which the jig is in contact with the circumferential surface.

The circumferential surface of the inner surface of the end wall portion of the cover includes faces inward or outward. The axis of the region defined by the circumferential surface coincides with the axis of the stator. The diameter of the region defined by the circumferential surface is equal to or smaller than the inside diameter of the stator. The circumferential surface is useful in manufacturing the stator unit. More specifically, the aforementioned methods for manufacturing a stator unit each include: (1-a) inserting, into a stator, a jig having an outward-facing circumferential surface (external circumferential surface) that can come into contact with an inward-facing circumferential surface of a cover and having a coefficient of linear expansion higher than a coefficient of linear expansion of the cover or (1-b)inserting, into a stator, a jig having an inward-facing circumferential surface (internal circumferential surface) that can come into contact with an outward-facing circumferential surface of a cover and having a coefficient of linear expansion lower than a coefficient of linear expansion of the cover; (2) placing the jig in such a manner that the (external or internal) circumferential surface of the jig faces the circumferential surface of the cover; and (3) heating the cover and the jig in such a manner that the circumferential surface of the jig and the circumferential surface of the cover come into contact with each other along an entire circumference. In this way, the (external or internal) circumferential surface of the jig and the circumferential surface of the cover come into close contact with each other, and the jig is fixed to the cover without the need for a clamp or the like. With the jig being fixed to the cover, filling resin in liquid form is poured into the cover. Consequently, the inside of the stator and the space between the stator and the cover are filled with the filling resin. This procedure eliminates the need for forming the stator by insert molding and the need for clamping, thus enabling a reduction in the cost of manufacturing the stator unit. The inside of the stator is filled with the filling resin, and the stator unit is thus rendered highly waterproof.

### BRIEF DESCRIPTION OF THE DRAWINGS

Fig. 1 illustrates a motor-operated valve including a stator unit manufactured by a method according to an embodiment of the present invention.
Fig. 2 illustrates a method for manufacturing the stator unit illustrated in Fig. 1 in a state in which the stator unit is disassembled.
Fig. 3 illustrates the method for manufacturing the stator unit illustrated in Fig. 1 in a state in which the stator unit is assembled.
Fig. 4 illustrates the method for manufacturing the stator unit illustrated in Fig. 1 in a state in which the stator unit is in finished form.
Fig. 5 is an enlarged sectional view of the region enclosed with a dash-dot-dot line in Fig. 3.
Fig. 6 illustrates a method for manufacturing a stator unit that is a first modification of the stator unit illustrated in Fig. 1 in a state in which the stator unit is assembled.
Fig. 7 illustrates the method for manufacturing the stator unit illustrated in Fig. 6 in a state in which the stator unit is in finished form.
Fig. 8 is an enlarged sectional view of the region enclosed with a dash-dot-dot line in Fig. 6.
Fig. 9 illustrates a method for manufacturing a stator unit that is a second modification of the stator unit illustrated in Fig. 1 in a state in which the stator unit is assembled.
Fig. 10 illustrates the method for manufacturing the stator unit illustrated in Fig. 9 in a state in which the stator unit is in finished form.
Fig. 11 is an enlarged sectional view of the region enclosed with a dash-dot-dot line in Fig. 9.

### DESCRIPTION OF THE PREFERRED EMBODIMENTS

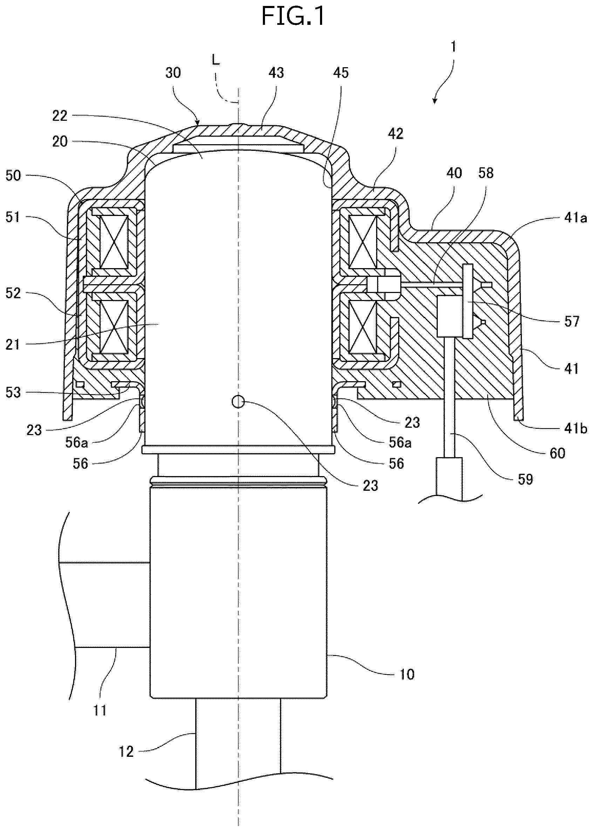

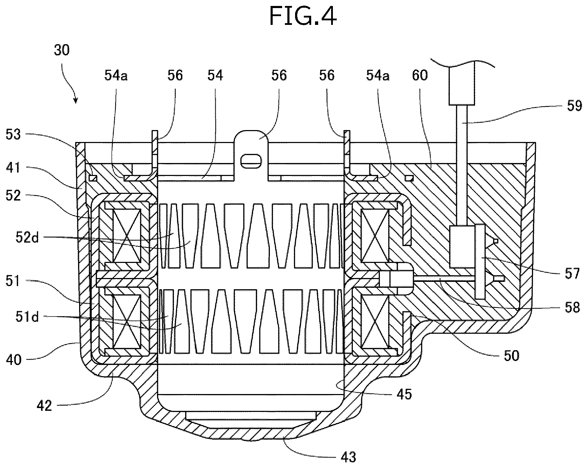

Hereinafter, a motor-operated valve manufactured by a method according to an embodiment of the present invention will be described with reference to Figs. 1 to 5.

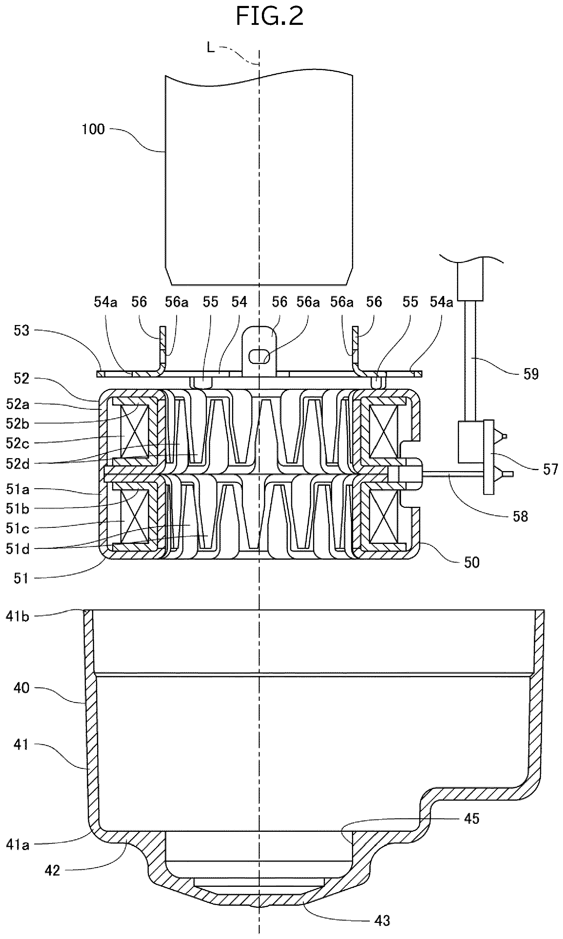

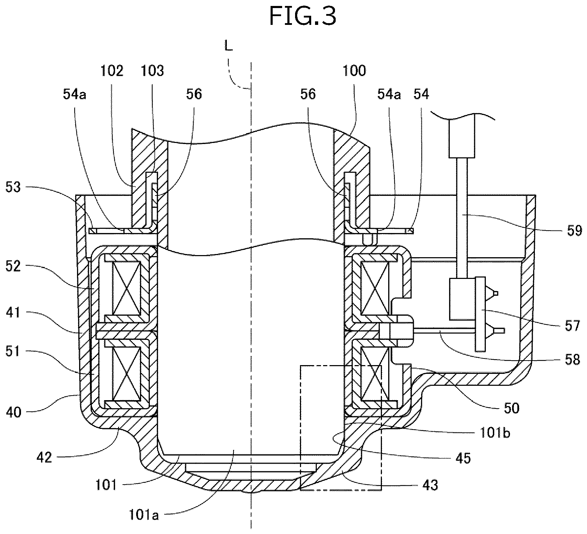

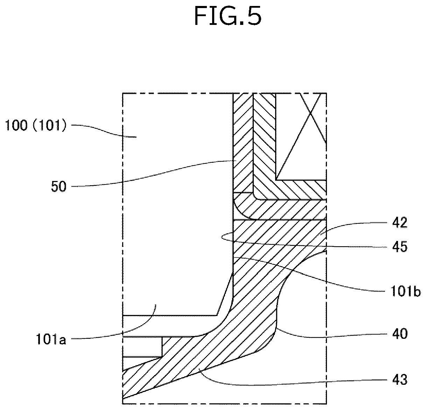

Fig. 1 is a front view of a motor-operated valve including a stator unit according to an embodiment of the present invention. In Fig. 1, the stator unit is viewed in section. Figs. 2 to 4 illustrate a method for manufacturing the stator unit illustrated in Fig. 1. More specifically, Figs. 2 to 4 respectively illustrate a state in which the stator unit is disassembled, a state in which the stator unit is assembled, and a state in which the stator unit is in finished form. In Figs. 2 to 4, a cover, a stator, and a mold are viewed in section. Fig. 5 is an enlarged sectional view of the region enclosed with a dash-dot-dot line in Fig. 3.

Referring to Fig. 1, a motor-operated valve 1 includes a valve main body 10, a can 20, and a stator unit 30. Unless otherwise specified, expressions "upper" and "lower" herein refer to the positional relationship in the top-bottom direction in Fig. 1.

The valve main body 10 has a hollow cylindrical shape with a bottom. The valve main body 10 includes a valve chamber and a valve port communicating with the valve chamber. A first conduit 11 and a second conduit 12 are fixed to the valve main body 10 by brazing. The first conduit 11 is connected to the valve chamber. The second conduit 12 is connected to the valve port. The valve chamber is provided with a valve element (not illustrated) for opening and closing the valve port.

The can 20 has a hollow cylindrical shape with its upper end closed. The can 20 includes a hollow cylindrical portion 21 and a ceiling portion 22, which are constructed as one piece. The valve main body 10 is attached to a lower end of the hollow cylindrical portion 21. The hollow cylindrical portion 21 has an external circumferential surface, on which protrusions 23 are arranged. The protrusions 23 are each hemispherical. Four protrusions 23 are arranged at 90° intervals on the external circumferential surface of the hollow cylindrical portion 21. The ceiling portion 22 is dome-shaped. The ceiling portion 22 is contiguous with an upper end of the hollow cylindrical portion 21. The upper end of the hollow cylindrical portion 21 is closed by the ceiling portion 22. A rotor (not illustrated) is disposed within the can 20. The rotor and the stator unit 30 constitute a stepping motor. The valve main body 10 is made of stainless steel or brass. The can 20 is made of stainless steel.

The stator unit 30 is disposed on the outside of the can 20. The stator unit 30 includes a cover 40, a stator 50, and a mold 60.

The cover 40 is made of synthetic resin. The cover 40 is in the shape of a cap. The cover 40 includes a circumferential wall portion 41 and an upper-end wall portion 42, which are constructed as one piece. The circumferential wall portion 41 is larger than the contour of the stator 50. The stator 50 is disposed on the inner side with respect to the circumferential wall portion 41, with a space left between the stator 50 and the circumferential wall portion 41. The upper-end wall portion 42 is contiguous with an upper end 41a (an end) of the circumferential wall portion 41. The upper-end wall portion 42 has a dome portion 43. The dome portion 43 is at an area in the upper-end wall portion 42 facing the can 20 in the top-bottom direction. The upper-end wall portion 42 and the can 20 face each other along a circumference, from which the dome portion 43 protrudes upward. The dome portion 43 may have a top part having an opening. The dome portion 43 has an inner surface including a circumferential surface 45, which faces inward. The diameter of the circumferential surface 45 is equal to the outside diameter of the can 20. The diameter of the circumferential surface 45 is not limited to a particular value. It is only required that the diameter of the circumferential surface 45 be equal to or smaller than the inside diameter of the stator 50. The diameter of the region defined by the circumferential surface 45 is equal to the outside diameter of the can 20. In this embodiment, the circumferential surface 45 has a height of 5 mm; that is, the circumferential surface 45 is 5 millimeters long along an axis L. The circumferential surface 45 preferably has a height of 1 to 10 mm. The diameter of the region defined by the circumferential surface 45 is not limited to a particular value. It is only required that the diameter of the region defined by the circumferential surface 45 be equal to or smaller than the inside diameter of the stator 50.

The cover 40 is made of rigid resin, such as polybutylene terephthalate (PBT) (coefficient of linear expansion: 2.5 × 10⁻⁵/°C) or polyphenylene ether (PPE) (coefficient of linear expansion: 6.6 × 10⁻⁵/°C).

The stator 50 has a hollow cylindrical shape. The stator 50 includes a first stator 51, a second stator 52, a fastening member 53, and a lead wire connection section 57. The first stator 51, the second stator 52, and the fastening member 53 are aligned in the top-bottom direction on the drawing plane (i.e., along the axis L).

The first stator 51 includes metal components such as a yoke 51a, a bobbin 51b, and a coil 51c. The coil 51c in the yoke 51a is made of a coil wire wound around the bobbin 51b. The yoke 51a includes pole teeth 51d, which are claw poles. The pole teeth 51d include downward-pointing pole teeth and upward-pointing pole teeth. Tips (tapered tip portions) of the downward-pointing pole teeth face downward, and tips (tapered tip portions) of the upward-pointing pole teeth face upward. The downward-pointing teeth and the upward-pointing teeth are alternately arranged in the circumferential direction.

The second stator 52 is structurally similar to the first stator 51. More specifically, the second stator 52 includes metal components such as a yoke 52a, a bobbin 52b, a coil 52c, and pole teeth 52d. The inside diameter of the first stator 51 and the inside diameter of the second stator 52 are each equal to the outside diameter of the can 20. The inside diameter of the first stator 51 and the second stator 52 are each equal to the diameter of the circumferential surface 45 of the cover 40.

The fastening member 53 includes a flat plate portion 54, connecting tabs 55, and holding tabs 56. The flat plate portion 54 has an annular shape. The fastening member 53 is formed by using the following procedure: stamping out the flat plate portion 54, the connecting tabs 55, and the holding tabs 56 from a metal sheet; folding the connecting tabs 55 in one direction in such a manner that each connecting tab 55 and the flat plate portion 54 form a right angle; and folding the holding tabs 56 in the opposite direction in such a manner that each holding tab 56 and the flat plate portion 54 form a right angle. The flat plate portion 54 has through-holes 54a. The connecting tabs 55 are welded to the yoke 52a of the second stator 52. The first stator 51, the second stator 52, and the fastening member 53 have coincident axes.

The fastening member 53 in this embodiment includes four holding tabs 56. The holding tabs 56 are disposed so as to correspond to the respective protrusions 23 of the can 20. The distance between two holding tabs 56 facing each other in the radial direction of the stator 50 is equal to the outside diameter of the can 20. The can 20 is inserted into the stator 50 such that inward-facing surfaces of the holding tabs 56 come into contact with an external circumferential surface of the can 20. The holding tabs 56 each have a holding hole 56a. The protrusions 23 are caught in the respective holding holes 56a such that the can 20 and the stator unit 30 are held in place.

The lead wire connection section 57 is a substrate connected to a tip of a coil terminal pin 58, which extends from the stator 50 in a direction orthogonal to the axis L. The lead wire connection section 57 is connected with a lead wire 59.

In this embodiment, the inside diameter of the stator 50 or, more specifically, the inside diameter of each of the first stator 51 and the second stator 52 is equal to the diameter of the region defined by the circumferential surface 45 of the cover 40.

The inside of the stator 50 is filled with the mold 60. More specifically, the inside of the first stator 51, the inside of the second stator 52, the space between the second stator 52 and the flat plate portion 54, and the through-holes 54a of the flat plate portion 54 are filled with the mold 60. The flat plate portion 54 is embedded in the mold 60. The space between the cover 40 and the stator 50 is also filled with the mold 60.

The mold 60 is made of highly flexible resin, such as urethane, epoxy, or silicone. The highly flexible resin is hereinafter referred to as filling resin. The filling resin used in this embodiment is thermoset urethane.

The valve main body 10, the can 20, the circumferential surface 45 of the cover 40, and the stator 50 (i.e., the first stator 51, the second stator 52, and the fastening member 53) included in the motor-operated valve 1 each have a central axis that coincides with the axis L.

The following describes a mandrel 100, which is used to manufacture the stator unit 30 of the motor-operated valve 1 described above.

The mandrel 100 is a jig having a hollow cylindrical shape. Alternatively, the mandrel 100 may have a solid cylindrical shape. The mandrel 100 is made of synthetic resin. The mandrel 100 is formed by injection molding. The coefficient of linear expansion of the synthetic resin that is the material of the mandrel 100 is higher than the coefficient of linear expansion of the material of the cover 40. The mandrel 100 is made of rigid resin, such as polytetrafluoroethylene (PTFE) (coefficient of linear expansion: 10 × 10⁻⁵/°C), polystyrene (PS) (coefficient of linear expansion: 5.0 to 8.3 × 10⁻⁵/°C), or polyacetal (POM) (coefficient of linear expansion: 3.3 to 7.5 × 10⁻⁵/°C). Alternatively, the mandrel 100 may be made of metal.

The mandrel 100 includes a trunk portion 101 and a stator-holding portion 102. The trunk portion 101 has a hollow cylindrical shape. The outside diameter of the trunk portion 101 at room temperature is equal to or slightly smaller than the diameter of the circumferential surface 45 of the cover 40. Thus, the outside diameter of the trunk portion 101 at room temperature is equal to or slightly smaller than the diameter of the region defined by the circumferential surface 45 of the cover 40. The outside diameter of the trunk portion 101 is substantially equal to the outside diameter of the can 20. A tip 101a of the trunk portion 101 is placed in the region defined by the circumferential surface 45. The stator-holding portion 102 is contiguous with the trunk portion 101. The stator-holding portion 102 has a hollow cylindrical shape. The outside diameter of the stator-holding portion 102 is greater than the outside diameter of the trunk portion 101. A slit 103 annularly extends between the stator-holding portion 102 and the trunk portion 101. The mandrel 100 is inserted into the stator 50 such that the inward-facing surfaces of the holding tabs 56 come into contact with an external circumferential surface 101b of the trunk portion 101 of the mandrel 100, and the holding tabs 56 are received in the slits 103 (see Fig. 3).

The following describes a method for manufacturing the stator unit 30 of the motor-operated valve 1 with reference to Figs. 2 to 5.

Referring to Fig. 2, the cover 40 is placed in a roomtemperature atmosphere in such a manner that a lower end 41b (another end) of the circumferential wall portion 41 faces upward. The stator 50 is then placed in the cover 40 in such a manner that the first stator 51 is in contact with the upper-end wall portion 42. Subsequently, the trunk portion 101 of the mandrel 100 is inserted into the stator 50. The mandrel 100 is placed as illustrated in Fig. 3. More specifically, the tip 101a of the trunk portion 101 is slid into the dome portion 43 of the cover 40 such that the external circumferential surface 101b of the trunk portion 101 and the circumferential surface 45 face each other in the direction orthogonal to the axis L. The tip 101a is placed in the region defined by the circumferential surface 45. In this state, the holding tabs 56 of the stator 50 are in contact with the trunk portion 101, and each holding tab 56 is located on the inner side of the slit 103 provided in the mandrel 100. The stator 50 and the mandrel 100 held in place have coincident axes. The stator-holding portion 102 of the mandrel 100 is in contact with the flat plate portion 54.

Then, the cover 40, the stator 50, and the mandrel 100 assembled to each other are heated. The coefficient of linear expansion of the mandrel 100 is higher than the coefficient of linear expansion of the cover 40. Accordingly, the amount of change in the outside diameter of the mandrel 100 is greater than the amount of change in the diameter of the region defined by the circumferential surface 45 of the cover 40. Consequently, the external circumferential surface 101b at the tip 101a of the mandrel 100 and the circumferential surface 45 come into contact with each other along the entire circumference. The height of a contact portion where the external circumferential surface 101b and the circumferential surface 45 are in contact with each other (the length of fit) is 5 mm. The length of fit is preferably equal to or more than 0.2 mm. With the contact portion being provided, the mandrel 100 is fixed to the cover 40 in such a manner that the region defined by the circumferential surface 45 and the mandrel 100 have coincident axes. Likewise, the mandrel 100 and the stator 50 have coincident axes. The stator 50 is held between the cover 40 and the stator-holding portion 102 of the mandrel 100.

As the filling resin, urethane in liquid form is then poured into the cover 40 so as to flow into the stator 50 and the space between the cover 40 and the stator 50. The mold 60 is obtained by setting of urethane. The cover 40, the stator 50, and the mandrel 100 then cool to room temperature. Subsequently, the mandrel 100 is pulled out of the stator 50. The stator unit 30 obtained by this process is in finished form.

The stator unit 30 included in the motor-operated valve 1 in this embodiment has been described so far. The inner surface of the dome portion 43 on the upper-end wall portion 42 of the cover 40 includes the circumferential surface 45, which faces inward. The axis of the region defined by the circumferential surface 45 coincides with the axis of stator 50. The diameter of the region defined by the circumferential surface 45 is equal to the inside diameter of the stator 50. The circumferential surface 45 is useful in manufacturing the stator unit 30. More specifically, the stator unit 30 is manufactured by using the procedure including: (1) inserting, into the stator 50, the mandrel 100 having a coefficient of linear expansion higher than a coefficient of linear expansion of the cover 40; (2) placing the mandrel 100 in such a manner that the external circumferential surface 101b at the tip 101a of the mandrel 100 faces the circumferential surface 45; and (3) heating the cover 40, the stator 50, and the mandrel 100 in such a manner that the external circumferential surface 101b at the tip 101a of the mandrel 100 and the circumferential surface 45 come into contact with each other along the entire circumference. In this way, the external circumferential surface 101b of the mandrel 100 and the circumferential surface 45 of the cover 40 come into close contact with each other, and the mandrel 100 is fixed to the cover 40 without the need for a clamp or the like. With the mandrel 100 being fixed to the cover 40, urethane in liquid form is poured into the cover 40 and is consequently formed into the mold 60, with which the inside of the stator 50 and the space between the stator 50 and the cover 40 are filled. This procedure eliminates the need for forming the stator 50 by insert molding and the need for clamping, thus enabling a reduction in the cost of manufacturing the stator unit 30. The inside of the stator 50 is filled with urethane, and the stator unit 30 is thus rendered highly waterproof.

The circumferential surface 45 of the stator unit 30 has a height of 5 mm. Thus, the mandrel 100 is more reliably fixed to the cover 40. The circumferential surface 45 preferably has a height of 1 to 10 mm. If the height of the circumferential surface 45 is greater than 10 mm, the stator unit 30 would be large in size.

In a state in which the external circumferential surface 101b of the mandrel 100 is in contact with the circumferential surface 45, the stator-holding portion 102 is in contact with the stator 50 in such a way as to restrict the movement of the stator 50 along the axis L. This structure enables the stator 50 to be held between the cover 40 and the stator-holding portion 102.

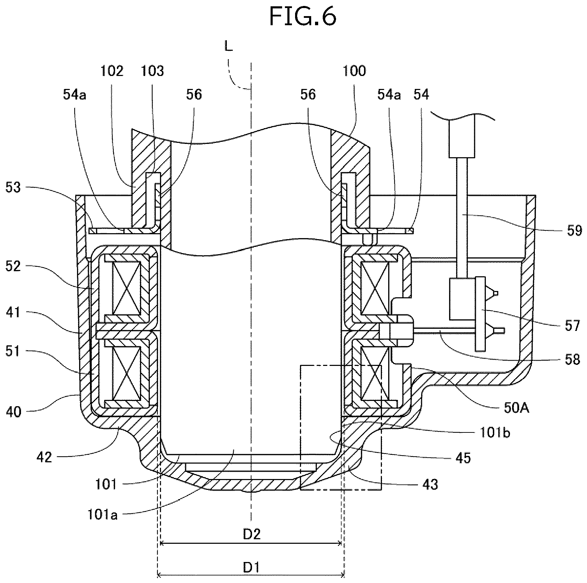

The following describes modifications of the stator unit 30 with reference to Figs. 6 to 11. Some of the constituent elements of the stator unit according to any one of the following modifications are denoted by the reference signs of the respective constituent elements of the above-described motor-operated valve 1. Unless otherwise specified, each of these constituent elements is identical or substantially identical to the corresponding constituent element of the motor-operated valve 1 in structural respects.

Figs. 6 to 8 illustrate a stator unit 30A, which is a first modification of the stator unit 30 described above. The stator unit 30A includes the cover 40, a stator 50A, and the mold 60.

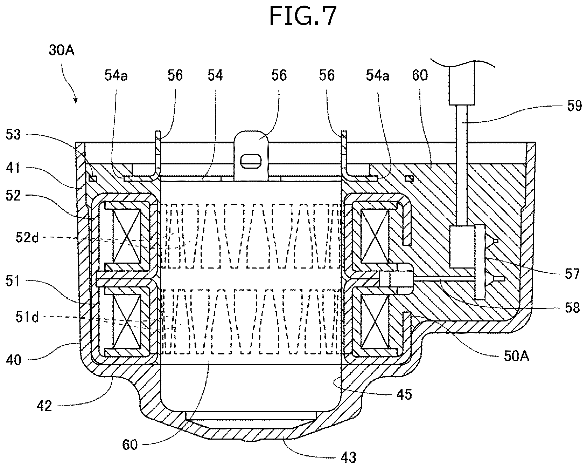

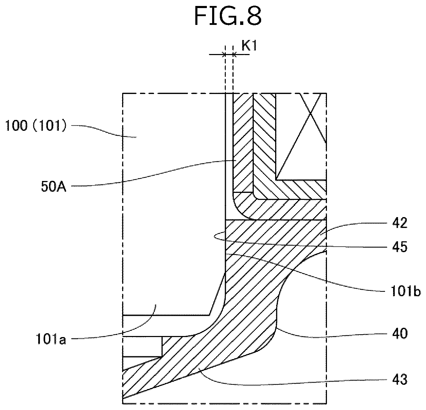

Referring to Fig. 6, D1 is greater than D2, where D1 denotes the inside diameter of the stator 50A, and D2 denotes the diameter of the region defined by the circumferential surface 45 of the cover 40. D2 also denotes the diameter of the circumferential surface 45 of the cover 40. The outside diameter of the trunk portion 101 of the mandrel 100 at room temperature is equal to or slightly smaller than the diameter of the region defined by the circumferential surface 45 of the cover 40. The mandrel 100 is inserted into the stator 50A such that a clearance K1 is left between the stator 50A and the mandrel 100, as illustrated in Fig. 8. At the time of manufacturing of the stator unit 30A, urethane in liquid form flows into the clearance K1 such that an internal circumferential surface of the stator 50A is covered with urethane. Consequently, the internal circumferential surface of the stator 50A included in the stator unit 30A is covered with the mold 60. Thus, the stator 50A (the pole teeth 51d and the pole teeth 52d) is not exposed, as illustrated in Fig. 7. The stator unit 30A is rendered more highly waterproof accordingly. When the can 20 and the stator unit 30A vibrate, the mold 60 comes into contact with the can 20; that is, the stator 50A is kept from contact with the can 20. The mold 60 absorbs shock caused by vibrations, thus eliminating or reducing abnormal sounds, out-of-step in the stepping motor, and the possibility that the can 20 will become scratched. This structure prevents or retards electrolytic corrosion of the can 20 and the stator 50A.

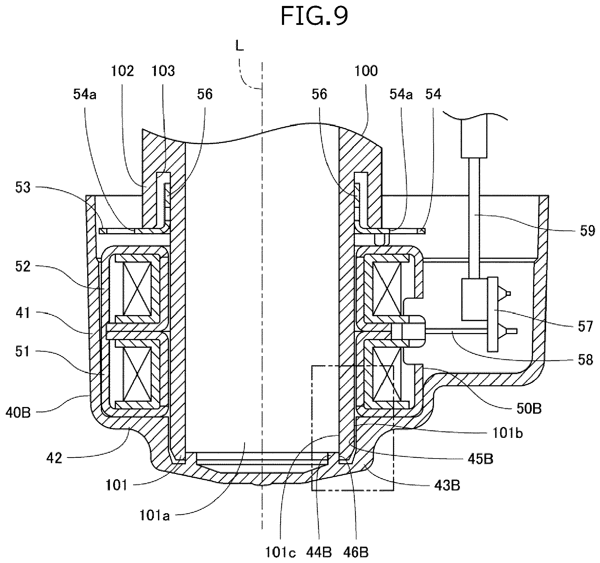

Figs. 9 to 11 illustrate a stator unit 30B, which is a second modification of the stator unit 30 described above. The stator unit 30B includes a cover 40B, a stator 50B, and the mold 60.

Referring to Fig. 9, the cover 40B includes a rib 44B, which has an annular shape and protrudes from an inner surface of a dome portion 43B along the axis L. The rib 44B has a circumferential surface 46B, which faces outward. The circumferential surface 46B is an external circumferential surface of the rib 44B. The circumferential surface 46B has a height of 2 mm. The circumferential surface 46B preferably has a height of 1 to 10 mm. The diameter of the circumferential surface 46B is smaller than the inside diameter of the stator 50B. Thus, the diameter of the region defined by the circumferential surface 46B is smaller than the inside diameter of the stator 50B. The dome portion 43B has a circumferential surface 45B, which faces inward. The diameter of the circumferential surface 45B is equal to the inside diameter of the stator 50B. Thus, the diameter of the region defined by the circumferential surface 45B is equal to the inside diameter of the stator 50B. The inside diameter of the trunk portion 101 of the mandrel 100 at room temperature is equal to or slightly greater than the diameter of the circumferential surface 46B. Thus, the inside diameter of the trunk portion 101 of the mandrel 100 at room temperature is equal to or slightly greater than the diameter of the region defined by the circumferential surface 46B. The diameter of the circumferential surface 45B and the inside diameter of the stator 50B are each greater than the outside diameter of the trunk portion 101. Thus, the diameter of the region defined by the circumferential surface 45B and the inside diameter of the stator 50B are each greater than the outside diameter of the trunk portion 101. The tip 101a of the trunk portion 101 is placed in the region defined by the circumferential surface 45B. The axes of the regions defined respectively by the circumferential surfaces 45B and 46B coincide with the axis of the stator 50B.

The stator unit 30B is manufactured by using the procedure including: (1) inserting, into the stator 50B, the mandrel 100 having a coefficient of linear expansion lower than a coefficient of linear expansion of the cover 40B; (2) placing the mandrel 100 in such a manner that an internal circumferential surface 101c at the tip 101a of the mandrel 100 faces the circumferential surface 46B; and (3) heating the cover 40B, the stator 50B, and the mandrel 100 in such a manner that the internal circumferential surface 101c at the tip 101a of the mandrel 100 and the circumferential surface 46B come into contact with each other along the entire circumference.

The coefficient of linear expansion of the mandrel 100 is lower than the coefficient of linear expansion of the cover 40B. Accordingly, the amount of change in the diameter of the region defined by the circumferential surface 46B of the cover 40B is greater than the amount of change in the inside diameter of the mandrel 100. Consequently, the internal circumferential surface 101c at the tip 101a of the mandrel 100 and the circumferential surface 46B come into contact with each other along the entire circumference. The mandrel 100 is fixed to the cover 40B in such a manner that the region defined by the circumferential surface 46B and the mandrel 100 have coincident axes.

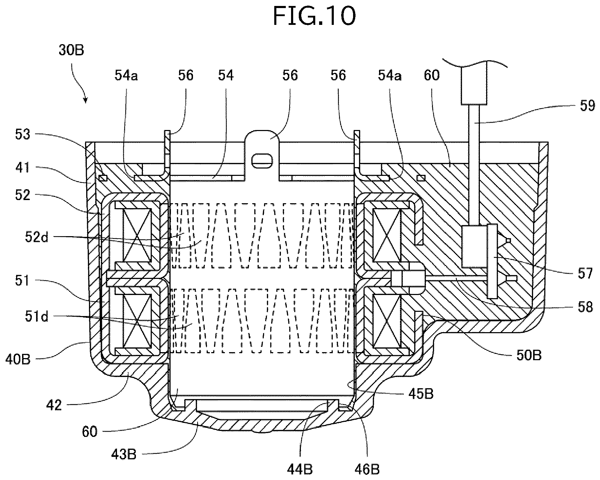

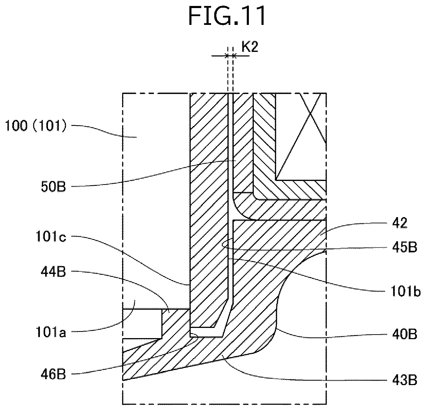

The inside diameter of the stator 50B included in the stator unit 30B and the diameter of the region defined by the circumferential surface 45B are each greater than the outside diameter of the trunk portion 101 of the mandrel 100. The mandrel 100 is inserted into the stator 50B such that a clearance K2 is left between the stator 50B and the mandrel 100 and between the circumferential surface 45B and the mandrel 100, as illustrated in Fig. 11. At the time of manufacturing of the stator unit 30B, urethane in liquid form flows into the clearance K2 such that an internal circumferential surface of the stator 50B is covered with urethane. Consequently, the internal circumferential surface of the stator 50B included in the stator unit 30B is covered with the mold 60. Thus, the stator 50B (the pole teeth 51d and the pole teeth 52d) is not exposed, as illustrated in Fig. 10. The stator unit 30B is rendered more highly waterproof accordingly. When the can 20 and the stator unit 30B vibrate, the mold 60 comes into contact with the can 20; that is, the stator 50B is kept from contact with the can 20. The mold 60 absorbs shock caused by vibrations, thus eliminating or reducing abnormal sounds, out-of-step in the stepping motor, and the possibility that the can 20 will become scratched. This structure prevents or retards electrolytic corrosion of the can 20 and the stator 50B.

The present invention is not limited to the described embodiments. Alterations and/or modifications of the described embodiments are contemplated as being alternative forms of the invention as far as they do not depart from the scope of the invention, which is defined by the appended claims.

## Claims

1. A stator unit, comprising:
a cover (40B) including a circumferential wall portion (41) and an end wall portion (42) contiguous with an end (41a) of the circumferential wall portion (41);
a stator (50B) accommodated in the cover (40B) and having a hollow cylindrical shape; and
a mold (60) made of filling resin with which an internal circumferential surface of the stator (50B) and a space between the stator (50B) and the cover (40B) are filled, wherein
the end wall portion (42) has a dome portion (43B),
the cover (40B) includes a rib (44B), which has an annular shape and protrudes from an inner surface of the dome portion (43B),
the rib (44B) includes a circumferential surface (46B) that faces outward, and
the circumferential surface (46B) defines a region having an axis that coincides with an axis of the stator (50B),
wherein the circumferential surface (46B) has a diameter smaller than an inside diameter of the stator (50B), and
wherein the circumferential surface (46B) is adapted to come into contact, along an entire circumference, with the internal circumferential surface (101c) at a tip (101a) of a jig (100) during a manufacturing process of the stator unit.

2. The stator unit according to Claim 1, wherein the circumferential surface (46B) has a height, in the axial direction, of 1 to 10 mm.

3. The stator unit according to Claim 1 or 2, wherein the stator (50B) has an internal circumferential surface covered with the mold (60).

4. A motor-operated valve, comprising:
a valve main body (10);
a can (20) attached to the valve main body (10); and
a stator unit (30B) mounted on an outside of the can (20), wherein
the stator unit (30B) is the stator unit according to any one of Claims 1 to 3.

5. A method for manufacturing a stator unit (30, 30A) that includes a cover (40) and a stator (50, 50A) having a hollow cylindrical shape, the cover (40) including a circumferential wall portion (41) and an end wall portion (42) contiguous with an end (41a) of the circumferential wall portion (41), the end wall portion (42) having an inner surface including a circumferential surface (45) that faces inward, the circumferential surface (45) defining a region having an axis that coincides with an axis of the stator (50, 50A), the region defined by the circumferential surface (45) having a diameter equal to or smaller than an inside diameter of the stator (50, 50A), the method comprising:
placing the stator (50, 50A) in the cover (40);
inserting, into the stator (50, 50A), a jig (100) having a coefficient of linear expansion higher than a coefficient of linear expansion of the cover (40) and having a hollow cylindrical shape or a solid cylindrical shape;
placing the jig (100) in such a manner that an external circumferential surface (101b) at a tip (101a) of the jig (100) faces the circumferential surface (45);
heating the cover (40) and the jig (100) in such a manner that the external circumferential surface (101b) at the tip (101a) of the jig (100) and the circumferential surface (45) come into contact with each other along an entire circumference; and
pouring filling resin in liquid form in a state in which another end (41b) of the circumferential wall portion (41) of the cover (40) faces upward in such a manner that an internal circumferential surface of the stator (50, 50A) and a space between the stator (50, 50A) and the cover (40) are filled with the filling resin.

6. A method for manufacturing a stator unit (30B) that includes a cover (40B) and a stator (50B) having a hollow cylindrical shape, the cover (40B) including a circumferential wall portion (41) and an end wall portion (42) contiguous with an end (41a) of the circumferential wall portion (41), the end wall portion (42) having an inner surface including a circumferential surface (46B) that faces outward, the circumferential surface (46B) defining a region having an axis that coincides with an axis of the stator (50B), the region defined by the circumferential surface (46B) having a diameter equal to or smaller than an inside diameter of the stator (50B), the method comprising:
placing the stator (50B) in the cover (40B);
inserting, into the stator (50B), a jig (100) having a coefficient of linear expansion lower than a coefficient of linear expansion of the cover (40B) and having a hollow cylindrical shape;
placing the jig (100) in such a manner that an internal circumferential surface (101c) at a tip (101a) of the jig (100) faces the circumferential surface (46B);
heating the cover (40B) and the jig (100) in such a manner that the internal circumferential surface (101c) at the tip (101a) of the jig (100) and the circumferential surface (46B) come into contact with each other along an entire circumference; and
pouring filling resin in liquid form in a state in which another end (41b) of the circumferential wall portion (41) of the cover (40B) faces upward in such a manner that an internal circumferential surface of the stator (50B) and a space between the stator (50B) and the cover (40B) are filled with the filling resin.

7. The method for manufacturing the stator unit (30A, 30B) according to Claim 5 or 6, wherein the stator (50A, 50B) has an inside diameter greater than an outside diameter of the jig (100).

8. The method for manufacturing the stator unit (30, 30A, 30B) according to any one of Claims 5 to 7, wherein the jig (100) includes a stator-holding portion (102) that is in contact with the stator (50, 50A, 50B) in such a way as to restrict movement of the stator (50, 50A, 50B) along an axis of the stator (50, 50A, 50B) in a state in which the jig (100) is in contact with the circumferential surface (45, 46B).

## Patentansprüche

1. Eine Statoreinheit, umfassend:
eine Abdeckung (40B) mit einem Umfangswandteil (41) und einem Endwandteil (42), das an ein Ende (41a) des Umfangswandteils (41) angrenzt;
einen Stator (50B), der in der Abdeckung (40B) angeordnet ist und eine hohle zylindrische Form aufweist; und
eine Schalung (60) aus Füllharz, mit der eine innere Umfangsfläche des Stators (50B) und ein Raum zwischen dem Stator (50B) und der Abdeckung (40B) gefüllt sind,
wobei
das Endwandteil (42) einen Kuppelabschnitt (43B) aufweist;
die Abdeckung (40B) eine Rippe (44B) umfasst, die ringförmig ausgebildet ist und sich von einer inneren Oberfläche des Kuppelteils (43B) erstreckt;
die Rippe (44B) eine Umfangsfläche (46B) umfasst, die nach außen gerichtet ist, wobei
die Umfangsfläche (46B) einen Bereich definiert, der eine Achse umfasst, die mit einer Achse des Stators (50B) übereinstimmt,
wobei die Umfangsfläche (46B) einen Durchmesser aufweist, der kleiner ist als ein Innendurchmesser des Stators (50B), und
wobei die Umfangsfläche (46B) eingerichtet ist, während eines Herstellungsprozesses der Statoreinheit entlang eines gesamten Umfangs mit der inneren Umfangsfläche (101c) an einer Spitze (101a) eines Dorns (100) in Kontakt zu kommen.

2. Statoreinheit nach Anspruch 1, wobei die Umfangsfläche (46B) in axialer Richtung eine Höhe von 1 bis 10 mm hat.

3. Statoreinheit nach Anspruch 1 oder 2, wobei die innere Umfangsfläche des Stators (50B) mit der Schalung (60) bedeckt ist.

4. Ein motorbetriebenes Ventil, umfassend:
einen Ventilhauptkörper (10);
eine Hülse (20), die am Ventilgehäuse (10) befestigt ist; und
eine Statoreinheit (30B), die an der Außenseite der Hülse (20) montiert ist, wobei die Statoreinheit (30B) die Statoreinheit nach einem der Ansprüche 1 bis 3 ist.

5. Ein Verfahren zur Herstellung einer Statoreinheit (30, 30A), die eine Abdeckung (40) und einen Stator (50, 50A) mit einer hohlzylindrischen Form umfasst, wobei die Abdeckung (40) ein Umfangswandteil (41) und ein Endwandteil (42) umfasst, das an ein Ende (41a) des Umfangswandteils (41) angrenzt, wobei das Endwandteil (42) eine Innenfläche mit einer Umfangsfläche (45) aufweist, die nach innen gerichtet ist, wobei die Umfangsfläche (45) einen Bereich definiert, der eine Achse umfasst, die mit einer Achse des Stators (50, 50A) übereinstimmt, wobei der von der Umfangsfläche (45) definierte Bereich einen Durchmesser hat, der gleich oder kleiner ist als ein Innendurchmesser des Stators (50, 50A), wobei das Verfahren umfasst:
Platzieren des Stators (50, 50A) in der Abdeckung (40);
Einführen eines Dorns (100), der einen höheren Längenausdehnungskoeffizienten als die Abdeckung (40) aufweist und welcher eine hohlzylindrische Form oder eine vollzylindrische Form hat, in den Stator (50, 50A),
Platzieren des Dorns (100) derart, dass eine äußere Umfangsfläche (101b) an einer Spitze (101a) des Dorns (100) der Umfangsfläche (45) zugewandt ist;
Erwärmen der Abdeckung (40) und des Dorns (100) derart, dass die äußere Umfangsfläche (101b) an der Spitze (101a) des Dorns (100) und die Umfangsfläche (45) entlang des gesamten Umfangs in Kontakt kommen; und
Gießen eines Füllharzes in flüssiger Form in einem Zustand, in dem ein anderes Ende (41b) des Umfangswandteils (41) der Abdeckung (40) derart nach oben zeigt, dass eine innere Umfangsfläche des Stators (50, 50A) und ein Raum zwischen dem Stator (50, 50A) und der Abdeckung (40) mit dem Füllharz gefüllt werden.

6. Ein Verfahren zur Herstellung einer Statoreinheit (30B), die eine Abdeckung (40B) und einen Stator (50B) mit einer hohlzylindrischen Form umfasst, wobei die Abdeckung (40B) ein Umfangswandteil (41) und ein Endwandteil (42) umfasst, das an ein Ende (41a) des Umfangswandteils (41) angrenzt, wobei das Endwandteil (42) eine Innenfläche mit einer Umfangsfläche (46B) aufweist, die nach außen gerichtet ist, wobei die Umfangsfläche (46B) einen Bereich definiert, der eine Achse umfasst, die mit einer Achse des Stators (50B) übereinstimmt, wobei der von der Umfangsfläche (46B) definierte Bereich einen Durchmesser hat, der gleich oder kleiner ist als ein Innendurchmesser des Stators (50B), wobei das Verfahren umfasst:
Platzieren des Stators (50B) in der Abdeckung (40B);
Einführen eines Dorns (100), der einen kleineren Längenausdehnungskoeffizienten als die Abdeckung (40B) aufweist und welcher eine hohlzylindrische Form hat, in den Stator (50B);
Platzieren des Dorns (100) derart, dass eine innere Umfangsfläche (101c) an einer Spitze (101a) des Dorns (100) der Umfangsfläche (46B) zugewandt ist;
Erwärmen der Abdeckung (40B) und des Dorns (100) derart, dass die innere Umfangsfläche (101c) an der Spitze (101a) des Dorns (100) und die Umfangsfläche (46B) entlang des gesamten Umfangs in Kontakt kommen; und
Gießen eines Füllharzes in flüssiger Form in einem Zustand, in dem ein anderes Ende (41b) des Umfangswandteils (41) der Abdeckung (40B) derart nach oben zeigt, dass eine innere Umfangsfläche des Stators (50B) und ein Raum zwischen dem Stator (50B) und der Abdeckung (40B) mit dem Füllharz gefüllt werden.

7. Das Verfahren zur Herstellung der Statoreinheit (30A, 30B) nach Anspruch 5 oder 6, wobei der Stator (50A, 50B) einen Innendurchmesser hat, der größer ist als ein Außendurchmesser des Dorns (100).

8. Das Verfahren zur Herstellung der Statoreinheit (30, 30A, 30B) nach einem der Ansprüche 5 bis 7, wobei der Dorn (100) einen Stator-Haltebereich (102) umfasst, der derart in Kontakt mit dem Stator (50, 50A, 50B) steht, dass die Bewegung des Stators (50, 50A, 50B) entlang der Achse des Stators (50, 50A, 50B) in einem Zustand beschränkt wird, in dem der Dorn (100) mit der Umfangsfläche (45, 46B) in Kontakt ist.

## Revendications

1. Unité de stator, comportant :
un couvercle (40B) comportant une partie de paroi circonférentielle (41) et une partie de paroi d'extrémité (42) contiguë à une extrémité (41a) de la partie de paroi circonférentielle (41) ;
un stator (50B) reçu dans le couvercle (40B) et ayant une forme cylindrique creuse ; et
un moule (60) constitué d'une résine de remplissage dont une surface circonférentielle intérieure du stator (50B) et un espace entre le stator (50B) et le couvercle (40B) sont remplis, dans laquelle
la partie de paroi d'extrémité (42) a une partie de dôme (43B),
le couvercle (40B) inclut une nervure (44B), qui a une forme annulaire et fait saillie à partir d'une surface intérieure de la partie de dôme (43B),
la nervure (44B) inclut une surface circonférentielle (46B) qui est dirigée vers l'extérieur, et
la surface circonférentielle (46B) définit une zone ayant un axe qui coïncide avec un axe du stator (50B),
dans laquelle la surface circonférentielle (46B) a un diamètre plus petit qu'un diamètre intérieur du stator (50B), et
dans laquelle la surface circonférentielle (46B) est adaptée pour venir en contact, le long d'une circonférence complète, avec la surface circonférentielle interne (101c) sur un embout (101a) d'un gabarit (100) pendant un processus de fabrication de l'unité de stator.

2. Unité de stator selon la revendication 1, dans laquelle la surface circonférentielle (46B) a une hauteur, dans la direction axiale, de 1 à 10 mm.

3. Unité de stator selon la revendication 1 ou 2, dans laquelle le stator (50B) a une surface circonférentielle interne recouverte avec le moule (60).

4. Soupape motorisée, comportant :
un corps principal de soupape (10) ;
un boîtier (20) fixé au corps principal de soupape (10) ; et
une unité de stator (30B) montée sur un extérieur du boîtier (20), dans laquelle l'unité de stator (30B) est l'unité de stator selon l'une quelconque des revendications 1 à 3.

5. Procédé pour fabriquer une unité de stator (30, 30A) qui inclut un couvercle (40) et un stator (50, 50A) ayant une forme cylindrique creuse, le couvercle (40) incluant une partie de paroi circonférentielle (41) et une partie de paroi d'extrémité (42) contiguë à une extrémité (41a) de la partie de paroi circonférentielle (41), la partie de paroi d'extrémité (42) ayant une surface intérieure incluant une surface circonférentielle (45) qui est dirigée vers l'intérieur, la surface circonférentielle (45) définissant une zone ayant un axe qui coïncide avec un axe du stator (50, 50A), la zone définie par la surface circonférentielle (45) ayant un diamètre égal ou inférieur à un diamètre intérieur du stator (50, 50A), le procédé comportant les étapes consistant à :
placer le stator (50, 50A) dans le couvercle (40) ;
insérer, dans le stator (50, 50A), un gabarit (100) ayant un coefficient de dilatation linéaire supérieur à un coefficient de dilatation linéaire du couvercle (40) et ayant une forme cylindrique creuse ou une forme cylindrique pleine ;
placer le gabarit (100) d'une telle manière qu'une surface circonférentielle externe (101b) sur un embout (101a) du gabarit (100) est dirigée vers la surface circonférentielle (45) ;
chauffer le couvercle (40) et le gabarit (100) d'une telle manière que la surface circonférentielle externe (101b) sur l'embout (101a) du gabarit (100) et la surface circonférentielle (45) viennent en contact l'une avec l'autre le long d'une circonférence complète ; et
verser de la résine de remplissage sous forme liquide dans un état dans lequel une autre extrémité (41b) de la partie de paroi circonférentielle (41) du couvercle (40) est dirigée vers le haut d'une telle manière qu'une surface circonférentielle interne du stator (50, 50A) et un espace entre le stator (50, 50A) et le couvercle (40) sont remplis avec la résine de remplissage.

6. Procédé pour fabriquer une unité de stator (30B) qui inclut un couvercle (40B) et un stator (50B) ayant une forme cylindrique creuse, le couvercle (40B) incluant une partie de paroi circonférentielle (41) et une partie de paroi d'extrémité (42) contiguë à une extrémité (41a) de la partie de paroi circonférentielle (41), la partie de paroi d'extrémité (42) ayant une surface intérieure incluant une surface circonférentielle (46B) qui est dirigée vers l'extérieur, la surface circonférentielle (46B) définissant une zone ayant un axe qui coïncide avec un axe du stator (50B), la zone définie par la surface circonférentielle (46B) ayant un diamètre égal ou inférieur à un diamètre intérieur du stator (50B), le procédé comportant les étapes consistant à :
placer le stator (50B) dans le couvercle (40B) ;
insérer, dans le stator (50B), un gabarit (100) ayant un coefficient de dilatation linéaire inférieur à un coefficient de dilatation linéaire du couvercle (40B) et ayant une forme cylindrique creuse ;
placer le gabarit (100) de telle manière qu'une surface circonférentielle interne (101c) sur un embout (101a) du gabarit (100) est dirigée vers la surface circonférentielle (46B) ;
chauffer le couvercle (40B) et le gabarit (100) de telle sorte que la surface circonférentielle interne (101c) sur l'embout (101a) du gabarit (100) et la surface circonférentielle (46B) viennent en contact l'une avec l'autre le long d'une circonférence complète ; et
verser de la résine de remplissage sous forme liquide dans un état dans lequel une autre extrémité (41b) de la partie de paroi circonférentielle (41) du couvercle (40B) est dirigée vers le haut d'une telle manière qu'une surface circonférentielle interne du stator (50B) et un espace entre le stator (50B) et le couvercle (40B) sont remplis avec la résine de remplissage.

7. Procédé pour fabriquer l'unité de stator (30A, 30B) selon la revendication 5 ou 6, dans lequel le stator (50A, 50B) a un diamètre intérieur supérieur à un diamètre extérieur du gabarit (100).

8. Procédé pour fabriquer l'unité de stator (30, 30A, 30B) selon l'une quelconque des revendications 5 à 7, dans lequel le gabarit (100) inclut une partie de maintien de stator (102) qui est en contact avec le stator (50, 50A, 50B) de telle manière à restreindre un mouvement du stator (50, 50A, 50B) le long d'un axe du stator (50, 50A, 50B) dans un état dans lequel le gabarit (100) est en contact avec la surface circonférentielle (45, 46B).
